# EUROPEAN PATENT APPLICATION

(11) **EP 4 737 050 A1**
(43) Date of publication of application: **06.05.2026**
(21) Application number: 25782884.8
(22) Date of filing: 31.03.2025
(51) Int. Cl.: B23K 26/362, B23K 26/08, B23K 37/04, B23K 26/14

(54) **LASER NOTCHING APPARATUS**

(30) Priority: 04.04.2024 KR 20240045859
(71) Applicant: LG Energy Solution, Ltd., Seoul 07335 (KR)
(72) Inventor: LEE, Seok Man, Daejeon 34122 (KR); PENG, Jian, Daejeon 34122 (KR); KIM, Tae Su, Daejeon 34122 (KR); KIM, Won Seop, Daejeon 34122 (KR); JEONG, Seon Yong, Daejeon 34122 (KR); PARK, Seong Ho, Daejeon 34122 (KR); LEE, Woo Jung, Daejeon 34122 (KR)
(74) Representative: Plasseraud IP
(86) International application number: PCT/KR2025/004131
(87) International publication number: WO 2025/211661

(57) **Abstract**

The technical idea of the present disclosure provides a laser notching apparatus including: a transfer part transferring an electrode sheet; a laser irradiation part irradiating a laser beam to the electrode sheet to notch the electrode sheet; a pattern jig configured to support the electrode sheet moving in a first direction; and a suction box on which the pattern jig is mounted and having an internal space, and the pattern jig includes: a pattern hole overlapping the electrode sheet in a second direction and through which the laser beam passes; and a side suction hole extending in a third direction crossing the first direction and the second direction and guiding external air to be drawn into the internal space of the suction box in the third direction.

## Description

### [Technical Field]

The present disclosure relates to a laser notching apparatus.

This application claims the benefit of priority from Korean Patent Application No. 10-2024-0045859, filed on April 04, 2024, the entire contents disclosed therein are incorporated by reference into this disclosure.

### [Background]

With technological development and increasing demand for mobile devices, the demand for secondary batteries is also rapidly increasing. Among them, lithium secondary batteries are widely used as energy sources for various mobile devices as well as various electronic products due to the high energy density and operating voltage and excellent storage and lifespan characteristics. Recently, as the application fields for secondary batteries have expanded, the demand for higher-capacity secondary batteries is rapidly increasing.

Generally, when manufacturing secondary batteries, a notching process is performed in which electrode active materials are coated on a current collector to manufacture an electrode sheet, and the electrode sheet is cut into a desired shape. The notching process includes a mold press method and a laser notching method. Although the laser notching method has high productivity, it is required to reduce component contamination issues caused by foreign matter such as fume or spatter.

### [Summary]

### [Technical Problem]

The technical problem to be solved by the present disclosure is to provide a laser notching apparatus.

### [Technical Solution]

To solve the above-described problem, the technical idea of the present disclosure provides a laser notching apparatus including: a transfer part transferring an electrode sheet; a laser irradiation part irradiating a laser beam to the electrode sheet to notch the electrode sheet; a pattern jig configured to support the electrode sheet moving in a first direction; and a suction box on which the pattern jig is mounted and having an internal space, wherein the pattern jig includes: a pattern hole overlapping the electrode sheet in a second direction and through which the laser beam passes; and a side suction hole extending in a third direction crossing the first direction and the second direction and guiding external air to be drawn into the internal space of the suction box in the third direction.

In exemplary embodiments, the pattern jig includes a support surface supporting the electrode sheet and a side surface not overlapping the electrode sheet, and the side suction hole extends from the side surface of the pattern jig in the third direction.

In exemplary embodiments, an inlet of the side suction hole on the side surface of the pattern jig is spaced apart from the pattern hole in the first direction.

In exemplary embodiments, an inlet of the side suction hole overlaps the pattern hole in the third direction.

In exemplary embodiments, the side suction hole has an inlet on the side surface of the pattern jig and an outlet opposite to the inlet, and a width of the outlet of the side suction hole and a width of the inlet of the side suction hole are different from each other.

In exemplary embodiments, the side suction hole includes a plurality of suction holes spaced apart from each other in the first direction.

In exemplary embodiments, the pattern jig further includes a plurality of through holes overlapping the electrode sheet in the second direction.

In exemplary embodiments, the laser notching apparatus further includes an air nozzle disposed within the internal space of the suction box and configured to inject air in the first direction.

In exemplary embodiments, the laser notching apparatus further includes a suction pipe connected to an exhaust port of the suction box; and a vacuum pump mounted to the suction pipe, wherein the exhaust port of the suction box is spaced apart from the air nozzle in the first direction.

In exemplary embodiments, the pattern jig further includes a support structure extending within the pattern hole and supporting the electrode sheet.

In exemplary embodiments, the suction box includes a suction slit through which external air is drawn in.

In exemplary embodiments, the pattern jig includes an overlapping region overlapping the electrode sheet and a non-overlapping region not overlapping the electrode sheet, and the side suction hole is within the non-overlapping region of the pattern jig.

In exemplary embodiments, the pattern jig includes an overlapping region overlapping the electrode sheet and a non-overlapping region not overlapping the electrode sheet, and a portion of the side suction hole is within the overlapping region of the pattern jig, and another portion of the side suction hole is within the non-overlapping region of the pattern jig.

In exemplary embodiments, the laser notching apparatus further includes an air nozzle disposed within the internal space of the suction box and configured to inject air in the first direction; a suction pipe connected to an exhaust port of the suction box spaced apart from the air nozzle in the first direction; and a vacuum pump mounted to the suction pipe, wherein the pattern jig further includes a support surface supporting the electrode sheet; a side surface not overlapping the electrode sheet; a plurality of through holes overlapping the electrode sheet in the second direction and each extending from the support surface; and a support structure extending within the pattern hole and supporting the electrode sheet, and the side suction hole extends from the side surface of the pattern jig in the third direction.

### [Advantageous Effects]

According to exemplary embodiments of the present disclosure, since the pattern jig has a side suction hole extending from the side surface, foreign matter scattered to the outside of the electrode sheet can be suctioned into the suction box without affecting the transfer of the electrode sheet, thereby suppressing external contamination of the laser notching apparatus.

In addition, according to exemplary embodiments of the present disclosure, since the pattern jig has a side suction hole extending from the side surface, accumulation of foreign matter on the inner surface of the pattern jig can be prevented without affecting the transfer of the electrode sheet, thereby suppressing internal contamination of the pattern jig. Since internal contamination of the pattern jig is suppressed, the replacement cycle and/or cleaning cycle of the pattern jig can be prolonged, and ultimately the productivity of the laser notching apparatus can be improved.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view illustrating a laser notching apparatus according to exemplary embodiments of the present disclosure.
FIG. 2 is a cross-sectional view of the laser notching apparatus according to II-II' line of FIG. 1.
FIG. 3 is a cross-sectional view of the laser notching apparatus according to III-III' line of FIG. 1.
FIG. 4 is a side view illustrating the laser notching apparatus viewed from the direction indicated by "IV" in FIG. 1.
FIG. 5 is a side view illustrating the laser notching apparatus viewed from the direction indicated by "V" in FIG. 1.
FIG. 6 is a cross-sectional view illustrating a pattern jig of the laser notching apparatus according to VI-VI' line of FIG. 5.
FIG. 7 is a cross-sectional view illustrating a pattern jig of a laser notching apparatus according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

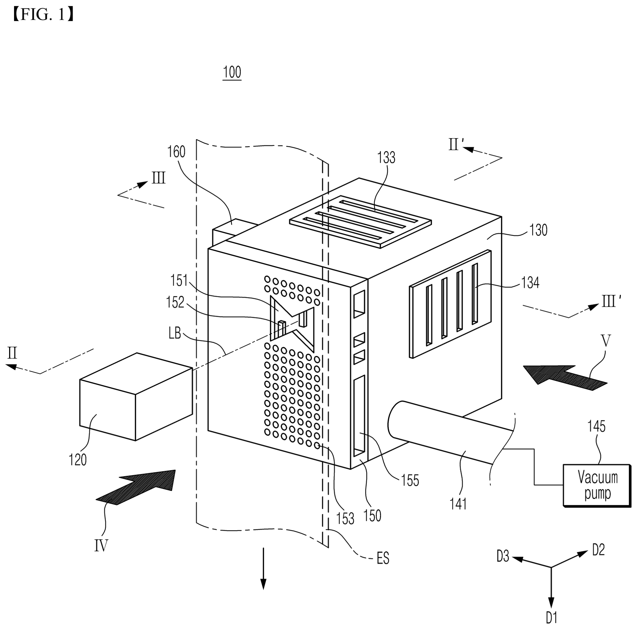

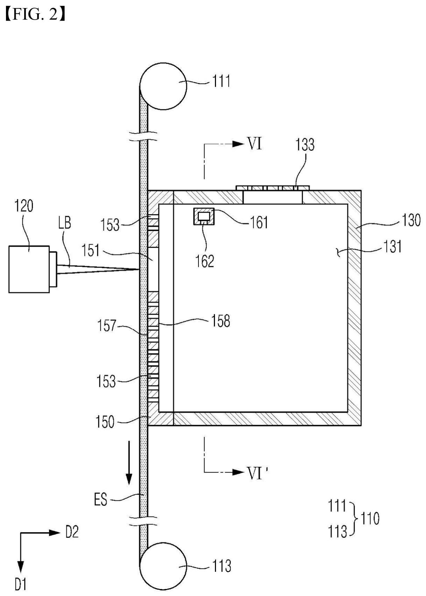

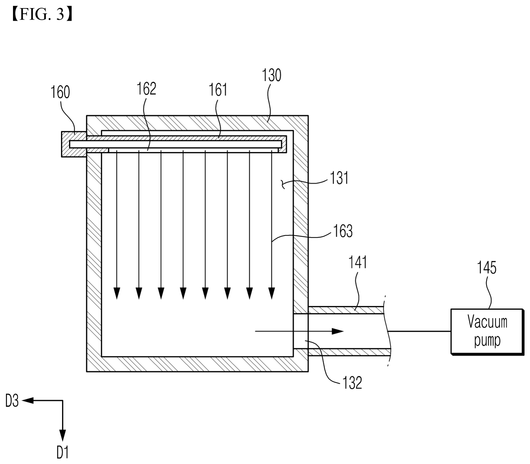

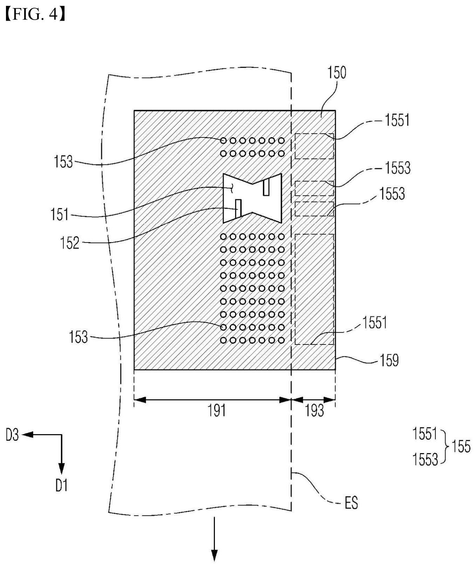

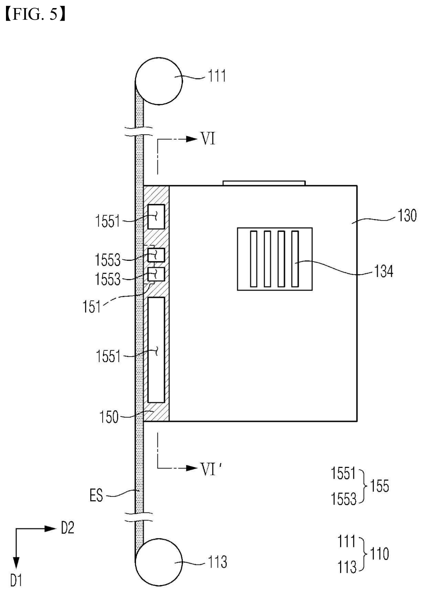

FIG. 1 is a perspective view illustrating a laser notching apparatus 100 according to exemplary embodiments of the present disclosure. FIG. 2 is a cross-sectional view of the laser notching apparatus 100 according to II-II' line of FIG. 1. FIG. 3 is a cross-sectional view of the laser notching apparatus 100 according to III-III' line of FIG. 1. FIG. 4 is a side view illustrating the laser notching apparatus 100 viewed from the direction indicated by "IV" in FIG. 1. FIG. 5 is a side view illustrating the laser notching apparatus 100 viewed from the direction indicated by "V" in FIG. 1.

Referring to FIG. 1 to FIG. 5, the laser notching apparatus 100 may be configured to perform a laser notching process on an electrode sheet ES. The laser notching apparatus 100 may be configured to perform a laser notching process for processing the electrode sheet ES into a desired shape using a laser beam LB to manufacture an electrode for a secondary battery.

Here, the electrode sheet ES may include a substrate layer and an electrode slurry layer coated on at least one of both surfaces of the substrate layer. The substrate layer is a current collector and may include, for example, copper or aluminum. The electrode slurry layer may include a positive electrode active material slurry or a negative electrode active material slurry. The electrode sheet ES may include a coated portion, which is a region where the electrode slurry layer is coated, and an uncoated portion where the electrode slurry layer is not coated. In the coated portion of the electrode sheet ES, the surface of the substrate layer may be covered by the electrode slurry layer and not exposed to the outside. In the uncoated portion of the electrode sheet ES, the surface of the substrate layer may be exposed. The uncoated portion of the electrode sheet ES may be at both edge portions along the width direction of the electrode sheet ES. The laser notching apparatus 100 may cut the uncoated portion of the electrode sheet ES so that the electrode sheet ES has an electrode tab.

The laser notching apparatus 100 may include a transfer part 110, a laser irradiation part 120, a suction box 130, a vacuum pump 145, a pattern jig 150, and a blower 160.

The transfer part 110 may transfer the electrode sheet ES along a predetermined transfer path. The transfer part 110 may include a supply roller 111 that supplies the electrode sheet ES and a winding roller 113 that winds the electrode sheet ES that has undergone the laser notching process. The supply roller 111 may be positioned at a starting point of the transfer path of the electrode sheet ES. The supply roller 111 may store an electrode roll in which the electrode sheet ES is wound in a roll form. As the supply roller 111 rotates in one rotation direction, the electrode sheet ES may be wound around the supply roller 111 in a roll form. In addition, as the supply roller 111 rotates in opposite direction, the electrode sheet ES may be supplied to the transfer path. The winding roller 113 may be positioned at an end point of the transfer path of the electrode sheet ES. The winding roller 113 may wind and store the electrode sheet ES that has undergone the laser notching process in a roll form. When transferring the electrode sheet ES, the supply roller 111 and the winding roller 113 may rotate in conjunction with each other. In the transfer path of the electrode sheet ES provided between the supply roller 111 and the winding roller 113, a plurality of guide rollers that guide the transfer of the electrode sheet ES may be disposed.

The laser irradiation part 120 may be disposed in the transfer path of the electrode sheet ES and may emit a laser beam LB toward the electrode sheet ES. The laser irradiation part 120 may include at least one light source that generates the laser beam LB. The laser irradiation part 120 may irradiate the laser beam LB to the electrode sheet ES to cut the electrode sheet ES into a predetermined shape. While the electrode sheet ES is transferred along the transfer path, the irradiation position of the laser beam LB emitted from the laser irradiation part 120 moves and the electrode sheet ES may be cut into a predetermined shape.

The suction box 130 may be disposed on one side of the electrode sheet ES. The suction box 130 may overlap the electrode sheet ES in a second direction D2 that is perpendicular to or crosses a first direction D1. The suction box 130 and the laser irradiation part 120 may be spaced apart with the electrode sheet ES therebetween. The suction box 130 may have an internal space 131 into which foreign matter such as fume or spatter generated during laser notching is suctioned. The suction box 130 may be configured to capture foreign matter generated during laser notching together with a fume box (not shown) provided around the electrode sheet ES. In addition, the suction box 130 may include suction slits 133, 134 that communicate with the internal space 131 and provide a passage through which external air is drawn in.

The vacuum pump 145 may be connected to a suction pipe 141 connected to an exhaust port 132 of the suction box 130 and may exhaust the internal space 131 of the suction box 130. When the vacuum pump 145 decompresses the internal space 131 of the suction box 130 through the suction pipe 141, gas and foreign matter in the internal space 131 of the suction box 130 may be discharged to the suction pipe 141 through the exhaust port 132 of the suction box 130.

The pattern jig 150 may be disposed on one side of the electrode sheet ES and may be detachably mounted to the suction box 130. The pattern jig 150 may have approximately a panel or plate shape. The pattern jig 150 may be mounted to the suction box 130 to cover an opening of the suction box 130. The pattern jig 150 may suction and support the electrode sheet ES. The electrode sheet ES may move in the first direction D1 along the pattern jig 150. While the electrode sheet ES moves along the first direction D1, one surface of the electrode sheet ES may slide along a support surface 157 of the pattern jig 150.

The pattern jig 150 may include an overlapping region 191 overlapping the electrode sheet ES and a non-overlapping region 193 not overlapping the electrode sheet ES. The overlapping region 191 of the pattern jig 150 may overlap the electrode sheet ES in the second direction D2 that is perpendicular to or crosses the first direction D1. The non-overlapping region 193 of the pattern jig 150 does not overlap the electrode sheet ES in the second direction D2 and may protrude from an outer edge of the electrode sheet ES in a third direction D3 that is perpendicular to or crosses both the first direction D1 and the second direction D2.

The overlapping region 191 of the pattern jig 150 may include a pattern hole 151, a support structure 152, and a plurality of through holes 153.

The pattern hole 151 of the pattern jig 150 is disposed in an irradiation area of the laser beam LB emitted from the laser irradiation part 120 and may communicate with the internal space 131 of the suction box 130. During laser notching, the laser beam LB emitted from the laser irradiation part 120 may pass through the pattern hole 151. The pattern hole 151 may have a shape and area capable of covering the irradiation area of the laser beam LB. When the vacuum pump 145 decompresses the internal space 131 of the suction box 130 and the pattern hole 151, foreign matter generated in the process of the laser beam LB cutting the electrode sheet ES may be suctioned into the internal space 131 of the suction box 130 through the pattern hole 151.

The support structure 152 may extend within the pattern hole 151. A single or a plurality of support structures 152 may be provided within the pattern hole 151. The support structure 152 may contact and support the electrode sheet ES. The support structure 152 may support the electrode sheet ES to prevent or suppress deformation of the electrode sheet ES by suction force acting through the pattern hole 151.

The plurality of through holes 153 of the pattern jig 150 may each communicate with the internal space 131 of the suction box 130. Each through hole 153 may extend from the support surface 157 of the pattern jig 150 to an inner surface 158 of the pattern jig 150 and penetrate the pattern jig 150 in the second direction D2. In the pattern jig 150, the plurality of through holes 153 may be arranged in a matrix form to have a plurality of rows and a plurality of columns. When the vacuum pump 145 decompresses the internal space 131 of the suction box 130 and the plurality of through holes 153, suction force for suctioning the electrode sheet ES to the support surface 157 of the pattern jig 150 may act on the electrode sheet ES.

The non-overlapping region 193 of the pattern jig 150 may include a side suction hole 155 configured to suction external air. The side suction hole 155 may communicate with the outside of the suction box 130 and the internal space 131 of the suction box 130. The pattern jig 150 has a side surface 159 spaced apart from an outer edge of the electrode sheet ES so as not to overlap the electrode sheet ES, and the side suction hole 155 may extend from the side surface 159 of the pattern jig 150 in the third direction D3. The side suction hole 155 may guide external air to be drawn into the internal space 131 of the suction box 130 in the third direction D3. The side suction hole 155 may have an inlet and an outlet defined based on the suction direction of external air. The inlet of the side suction hole 155 is on the side surface 159 of the pattern jig 150 and may be exposed to an external space of the pattern jig 150. The outlet of the side suction hole 155 may be exposed to the internal space 131 of the suction box 130.

In exemplary embodiments, the side suction hole 155 may be entirely within the non-overlapping region 193 of the pattern jig 150 and may not overlap the electrode sheet ES in the second direction D2. In other exemplary embodiments, a portion of the side suction hole 155 may be within the non-overlapping region 193 of the pattern jig 150, and another portion of the side suction hole 155 may be positioned within the overlapping region 191 of the pattern jig 150 to overlap the electrode sheet ES in the second direction D2.

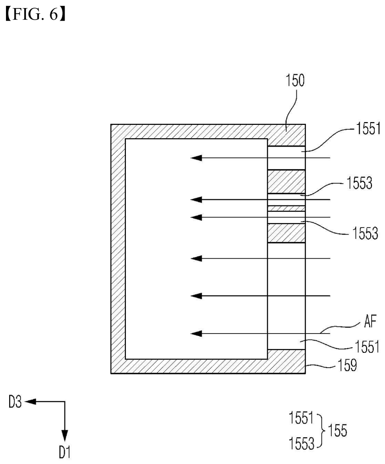

When the vacuum pump 145 decompresses the internal space 131 of the suction box 130, external air may be drawn into the internal space 131 of the suction box 130 through the side suction hole 155. While external air is drawn into the internal space 131 of the suction box 130 through the side suction hole 155 of the pattern jig 150, foreign matter scattered around the side surface 159 of the pattern jig 150 may be suctioned into the internal space 131 of the suction box 130. In addition, while external air is drawn into the internal space 131 of the suction box 130 through the side suction hole 155 of the pattern jig 150, airflow AF of FIG. 6 flowing in the third direction D3 may be formed around the inner surface 158 of the pattern jig 150. Such airflow AF may prevent accumulation of foreign matter on the inner surface 158 of the pattern jig 150, the through holes 153 of the pattern jig 150, and the support structure 152.

The side suction hole 155 of the pattern jig 150 may include a plurality of suction holes spaced apart from each other. For example, the side suction hole 155 of the pattern jig 150 may include a plurality of suction holes spaced apart from each other along the first direction D1. In exemplary embodiments, the side suction hole 155 of the pattern jig 150 may include at least one first suction hole 1551 not overlapping the pattern hole 151 in the third direction D3 and at least one second suction hole 1553 overlapping the pattern hole 151 in the third direction D3. An inlet of the second suction hole 1553 exposed to the side surface 159 of the pattern jig 150 may overlap the pattern hole 151 in the third direction D3. External air introduced into the internal space 131 of the suction box 130 through the second suction hole 1553 may prevent accumulation of foreign matter on the pattern jig 150 around the pattern hole 151. An inlet of the first suction hole 1551 exposed to the side surface 159 of the pattern jig 150 may be spaced apart from the pattern hole 151 by a predetermined distance in the first direction D1. External air introduced into the internal space 131 of the suction box 130 through the first suction hole 1551 may prevent accumulation of foreign matter on the pattern jig 150 around the through holes 153 of the pattern jig 150.

The blower 160 may be configured to inject air into the suction box 130. The blower 160 may inject air into the suction box 130 to form airflow 163 in one direction within the suction box 130. The blower 160 may have an air nozzle 161 provided within the internal space 131 of the suction box 130. The air nozzle 161 may have a bar shape extending in the third direction D3, and an injection port 162 may have a slit shape extending in the third direction D3. The air nozzle 161 may be configured to inject air in the first direction D1. The blower 160 may control the flow of foreign matter within the suction box 130 by adjusting the flow rate of air injected through the air nozzle 161.

The air nozzle 161 and the exhaust port 132 of the suction box 130 may be spaced apart in the first direction D1, and airflow 163 flowing in a direction generally parallel to the first direction D1 may be formed within the suction box 130 by air injected from the air nozzle 161. The direction of the airflow 163 provided within the suction box 130 by the air nozzle 161 may be perpendicular to or cross the direction of external air flowing along the side suction hole 155. Foreign matter within the suction box 130 may be rapidly flowed toward the exhaust port 132 by the airflow 163 formed within the suction box 130 by the air nozzle 161, thereby suppressing stagnation and accumulation of foreign matter within the suction box 130.

FIG. 6 is a cross-sectional view illustrating the pattern jig 150 of the laser notching apparatus 100 according to VI-VI' line of FIG. 5.

Referring to FIG. 1 to FIG. 6, when the vacuum pump 145 decompresses the internal space 131 of the suction box 130, external air flows into the internal space 131 of the suction box 130 through the side suction hole 155, and airflow AF flowing mainly in the third direction D3 is formed around the inner surface 158 of the pattern jig 150. When the side suction hole 155 includes the first suction hole 1551 and the second suction hole 1553, airflow AF flowing along the inner surface 158 of the pattern jig 150 may be formed over the entire inner surface 158 of the pattern jig 150, and formation of local airflow stagnation regions around the inner surface 158 of the pattern jig 150 may be suppressed.

A laser notching apparatus according to a comparative example may have suction holes in a region of the support surface of the pattern jig that does not overlap the electrode sheet. In this case, foreign matter scattered to the outside of the electrode sheet may be suctioned into the suction box through the suction holes, but there is a problem that the electrode sheet shakes in lateral directions due to suction force acting through the suction holes. Such shaking of the electrode sheet makes it difficult to cut the electrode sheet into a desired shape, thereby reducing the reliability of the secondary battery generated through the laser notching process.

According to exemplary embodiments of the present disclosure, since the pattern jig 150 has the side suction hole 155 extending from the side surface, foreign matter scattered to the outside of the electrode sheet ES can be suctioned into the suction box 130 without affecting the transfer of the electrode sheet ES, thereby suppressing external contamination of the laser notching apparatus 100.

In addition, according to exemplary embodiments of the present disclosure, since the pattern jig 150 has the side suction hole 155 extending from the side surface, accumulation of foreign matter on the inner surface 158 of the patternjig 150 can be prevented without affecting the transfer of the electrode sheet ES, thereby suppressing internal contamination of the pattern jig 150. Since internal contamination of the pattern jig 150 is suppressed, the replacement cycle and/or cleaning cycle of the pattern jig 150 can be prolonged, and ultimately the productivity of the laser notching apparatus 100 can be improved.

### (second embodiment)

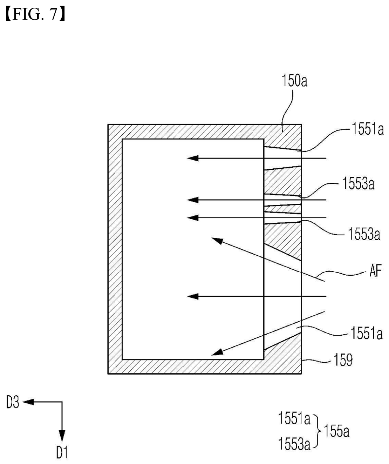

FIG. 7 is a cross-sectional view illustrating a pattern jig 150a of a laser notching apparatus according to exemplary embodiments of the present disclosure.

Referring to FIG. 7 together with FIG. 2, a width of a side suction hole 155a of a pattern jig 150a may be variable, and a width of an outlet of the side suction hole 155a of the pattern jig 150a and a width of an inlet of the side suction hole 155a of the pattern jig 150a may be different from each other. Here, the width of the side suction hole 155a of the pattern jig 150a, the width of the outlet of the side suction hole 155a of the pattern jig 150a, and the width of the inlet of the side suction hole 155a of the pattern jig 150a each refers to a width along a direction parallel to a first direction D1. In some exemplary embodiments, the width of the side suction hole 155a of the pattern jig 150a may gradually decrease in a direction from its outlet toward its inlet, and the width of the outlet of the side suction hole 155a may be larger than the width of the inlet of the side suction hole 155a. In some exemplary embodiments, the width of the side suction hole 155a of the pattern jig 150a may gradually increase in a direction from its outlet toward its inlet, and the width of the inlet of the side suction hole 155a may be larger than the width of the outlet of the side suction hole 155a.

When the side suction hole 155a of the pattern jig 150a includes a plurality of suction holes, one of the plurality of suction holes may have a shape that gradually decreases in a direction from its outlet toward its inlet. In exemplary embodiments, a width of a first suction hole 1551a of the pattern jig 150a may gradually decrease in a direction from its outlet toward its inlet. The width of the outlet of the first suction hole 1551a may be larger than the width of the inlet of the first suction hole 1551a. In exemplary embodiments, a width of a second suction hole 1553a of the pattern jig 150a may gradually decrease in a direction from its outlet toward its inlet. The width of the outlet of the second suction hole 1553a may be larger than the width of the inlet of the second suction hole 1553a.

When the side suction hole 155a of the pattern jig 150a has a shape that gradually decreases in a direction from its outlet toward its inlet, a flow range of external air through the side suction hole 155a is widened, thereby effectively suppressing formation of local airflow stagnation regions around an inner surface 158 of the pattern jig 150a.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A laser notching apparatus comprising:
a transfer part transferring an electrode sheet;
a laser irradiation part irradiating a laser beam to the electrode sheet to notch the electrode sheet;
a pattern jig configured to support the electrode sheet moving in a first direction; and
a suction box on which the pattern jig is mounted and having an internal space,
wherein the pattern jig comprises:
a pattern hole overlapping the electrode sheet in a second direction and through which the laser beam passes; and
a side suction hole extending in a third direction crossing the first direction and the second direction and guiding external air to be drawn into the internal space of the suction box in the third direction.

2. The laser notching apparatus of claim 1, wherein the pattern jig comprises a support surface supporting the electrode sheet and a side surface not overlapping the electrode sheet, and
the side suction hole extends from the side surface of the pattern jig in the third direction.

3. The laser notching apparatus of claim 2, wherein an inlet of the side suction hole on the side surface of the pattern jig is spaced apart from the pattern hole in the first direction.

4. The laser notching apparatus of claim 2, wherein an inlet of the side suction hole overlaps the pattern hole in the third direction.

5. The laser notching apparatus of claim 2, wherein the side suction hole has an inlet on the side surface of the pattern jig and an outlet opposite to the inlet, and
a width of the outlet of the side suction hole and a width of the inlet of the side suction hole are different from each other.

6. The laser notching apparatus of claim 1, wherein the side suction hole comprises a plurality of suction holes spaced apart from each other in the first direction.

7. The laser notching apparatus of claim 1, wherein the pattern jig further comprises a plurality of through holes overlapping the electrode sheet in the second direction.

8. The laser notching apparatus of claim 1, further comprising an air nozzle disposed within the internal space of the suction box and configured to inject air in the first direction.

9. The laser notching apparatus of claim 8, further comprising:
a suction pipe connected to an exhaust port of the suction box; and
a vacuum pump mounted to the suction pipe,
wherein the exhaust port of the suction box is spaced apart from the air nozzle in the first direction.

10. The laser notching apparatus of claim 1, wherein the pattern jig further comprises a support structure extending within the pattern hole and supporting the electrode sheet.

11. The laser notching apparatus of claim 1, wherein the suction box comprises a suction slit through which external air is drawn in.

12. The laser notching apparatus of claim 1, wherein the pattern jig comprises an overlapping region overlapping the electrode sheet and a non-overlapping region not overlapping the electrode sheet, and
the side suction hole is within the non-overlapping region of the pattern jig.

13. The laser notching apparatus of claim 1, wherein the pattern jig comprises an overlapping region overlapping the electrode sheet and a non-overlapping region not overlapping the electrode sheet, and
a portion of the side suction hole is within the overlapping region of the pattern jig, and another portion of the side suction hole is within the non-overlapping region of the pattern jig.

14. The laser notching apparatus of claim 1, further comprising:
an air nozzle disposed within the internal space of the suction box and configured to inject air in the first direction;
a suction pipe connected to an exhaust port of the suction box spaced apart from the air nozzle in the first direction; and
a vacuum pump mounted to the suction pipe,
wherein the pattern jig further comprises:
a support surface supporting the electrode sheet;
a side surface not overlapping the electrode sheet;
a plurality of through holes overlapping the electrode sheet in the second direction and each extending from the support surface; and
a support structure extending within the pattern hole and supporting the electrode sheet,
wherein the side suction hole extends from the side surface of the pattern jig in the third direction.
